# EUROPEAN PATENT APPLICATION

(11) **EP 2 113 489 A1**
(43) Date of publication of application: **04.11.2009**
(21) Application number: 08155311.7
(22) Date of filing: 28.04.2008
(51) Int. Cl.: C02F 3/08, C02F 3/18

(54) **Aerating rotatory device and biofilm carrier for waste water depuration**

(71) Applicant: Dytras, S.A., 41700 Dos Hermanas, Sevilla (ES)
(72) Inventor: Cassillas Ovando, Álvaro, 41700, Dos Hermanas, Sevilla (ES); Coca Sánchez, Rafael Evaristo, 41700, Dos Hermanas, Sevilla (ES); Candau Romero, Álvaro, 41700, Dos Hermanas, Sevilla (ES)
(74) Representative: Pons Ariño, Angel

(57) **Abstract**

The invention comprises means of support (2) that contains two facing support pieces; a rotational structure (3), discs (9) carrying biomass and aerators (10). The revolving structure is composed of two crowns (5) and includes central plates (18) where the supporting pieces are seated; exterior plates (13); radial bars (15) and mounting bars (14). The discs (9) bearing biomass feature an undulating shape and contain a central hole and a separating sleeve (16) and are arranged in packets (8) of various discs (9), separated by the separating sleeves (16), and threaded therethrough by a shaft (17) and are situated in the space between the parallel plates (5). The aerators (10) are prismatic bodies with aeration openings (11) on their lateral surfaces. They are arranged and joined to the periphery of the revolving structure (3) and house the packets (8) of discs (9).

## Description

### OBJECT OF THE INVENTION

This invention relates to the field of treatment of water, waste water, sewage or sludge. More specifically, the invention is a revolving device for producing aeration of waste water contained in a waste water treatment reactor and to serve as a biomass support for this waste water.

### BACKGROUND OF THE INVENTION

Microorganisms grow in waste water, feeding on organic matter and nutrients accumulated in said waste water and thus contribute to the purification thereof.

In the conditions that are normally found in nature, the purifying action of these microorganisms, so-called self-purification or natural biological purification, is not sufficient to completely remove all the contaminants present in waste water. This is due to factors such as the lack of a sufficiently large population of microorganisms, the absence of an adequate level of oxygenation or a low degree of contact between the water and the microorganisms.

With the aim of resolving these deficiencies, there are so-called biological waste water purification processes, created by mankind, where those aspects that are limited in nature are enhanced, such as the low concentration of microorganisms, deficiency of oxygen or a low degree of contact. In this way, efficient purification systems are created based on microorganisms carried by waste water.

When waste water enters a water purification plant, it undergoes a pre-treatment wherein solids and large-sized particles are removed, together with sands and fats. Then the water passes to the so-called primary treatment where easily sedimentable solids in suspension are removed along with some organic material.

The organic material that remains dissolved and in suspension, as well as the other solid particles that have not been removed by the previous treatments are now removed by means of the so-called Biological Purification Processes.

The Biological Purification Processes can be defined as those performed by a specific group of microorganisms (mainly bacteria and protozoa) that act on the dissolved organic and inorganic, suspended and colloidal matter in the waste water, transforming it into gases and cellular material that can be easily separated by means of sedimentation. The combination of organic matter, bacteria and mineral substances forms flocculates and the combination of flocculates is known as biological sludge.

The objectives of this type of treatment are the transformation of organic matter and the coagulation and removal of non-sedimentable colloidal solids. In the case of some urban waste waters, Nitrogen and Phosphorus are also removed. Lastly, the concentrations of pathogenic and faecal microorganisms, which may occur in waste water, are also reduced.

Biological purification processes are classified in two main groups according to the criteria followed to ensure an adequate concentration of microorganisms: activated sludge processes and fixed film processes.

In the activated sludge processes, microorganisms, such as sludge in suspension, are concentrated in a reactor by means of a re-circulation current coming from the water/sludge separation system at the end of the process. In the activated sludge process, therefore, two fundamental parts can be distinguished: the reactor and the settler. The reactor is the place where the required population of microorganisms is found, in the form of sludge in suspension, and receives waste water for purification. It is equipped with aeration and stirring systems in order to provide oxygen that the microorganisms need to carry our their activity and to guarantee a sufficient degree of mixing that assures that the microorganisms come into contact with the various substances (organic matter and nutrients) present in the waste water.

The activity taking place in the reactor favours the formation of flocculants and these are separated from the water by means of a sedimentation process. This is carried out in the settler. The sedimented sludge is partly re-circulated to the reactor in order to maintain an adequate concentration of microorganisms, and partly purged in order to compensate for the continuous growth of the population.

In fixed film processes, microorganisms are concentrated on the surface of a support medium over which the water to be purified is circulated. Microorganisms multiply and are retained in the reactor due to certain structures or support media that keep the microorganisms fixed, independent of the continuous flow of water through the reactor and without the need for re-circulation. The types of fixed film processes are very varied, depending on many factors, such as the type of structure used as a support medium, its location with respect to the water to be treated and the system of aeration employed. The main limitation of these types of processes lies in the need to guarantee that the water to be treated totally passes through the support medium where the colonies of microorganisms responsible for purification are growing. Systems using beds of support material in suspension are the fixed film systems that have been most frequently developed in recent years. In these, the support medium is made up of small plastic elements that remain in suspension in the interior of the reactor. In addition to aeration and stirring systems, grills are installed in the exit channels in order to prevent the outflow of the support elements.

In fact, these types of systems of beds of support material in suspension have led to the development of biological purification processes that can be called hybrid or mixed, wherein these, fixed biological cultures (bound to support material in suspension) and biological cultures in suspension are contained in the same activated sludge reactor to which support material elements are added. In this way, mixed cultivation processes are understood to be any systems that incorporate a fixed film technology on the base of an activated sludge process, thereby obtaining a hybrid system which unites the advantages the two components thereof, enabling a significant increase in the treatment capability.

The main difference between the various mixed cultivation processes in current use is the medium or support structure used to enable the growth of the bound biomass. Some of the support elements most often used commercially for these types of applications are:
- Means of fixed and submerged support within the reactor. Among these are frames where the support medium is formed by special strings that makes up a type of mesh, and the plastic elements in fixed structures are submerged in the reactor.
- Biofilm carrier of small size maintained in suspension in the interior of the reactor. Among these are the sponges of small size in the form of parallelepipeds and small cylinders of plastic material.
- Systems of rotating contactors (bio-discs). In these types of processes, a rotating fixed film system is installed within the biological reactor in the form of a group of bio-discs carrying as much bound biomass as desired.

Within this group are original solutions combining the provision of surface area for the growth of biomass with aeration mechanisms for the process. Such is the case of the STÄHLERMATIC system by the German company PASSAVANT - ROEDIGER ANLAGENBAU GmbH.

In German patent application DE4203103, a device is disclosed for the biological cleaning of waste water or water for consumption by the activated sludge method that comprises a plurality of hollow submerged bodies arranged on a transport medium, such as a chain or band, which penetrates and exits a reactor containing the activated sludge to be purified, following a circular motion. These bodies contain biomass and present cavities on their perimeter for the entry and exit of water with the aim of producing adequate oxygenation of the activated sludge, which contributes to the activity of the biomass.

Chinese patent document CN1736900 discloses a biological disc and a method of cleaning waste water that employs the aforementioned disc, which comprises a revolving drum partially submerged in an activated sludge reactor, actuated by a chain, modules being arranged on the periphery thereof, the discs containing biomass being located within the modules. The discs with the biomass alternately penetrate and exit the activated sludge reactor in order to achieve the oxygenation of the biomass.

Spanish patent ES2165088 discloses a submersible bed of bio-discs. It consists of an axis whereon a variety of circular discs are arranged radially, composed of individual sectors with the same radius and these are fixed parallel to the axis in guided traction fixings disposed radially in strips. These discs, by means of inserted spacers, feature a defined radial separation therebetween and form intermediate spaces. These enclose the different discs of the sector, each one in frictional drag between two contiguous axial separators. The separators are provided with axial grooves on their frontal side, and also cams fitting the grooves.

Japanese patent document JP580008587 discloses a device for the treatment of waste water that comprises a support structure that comprises an axis whereon discs containing bio-materials are mounted. The discs are partially submerged in waste water being treated and revolve around the aforementioned axis in such a way that aeration of the biomass contained in the discs occurs.

In international patent application WO95/33694, a panel for a rotating apparatus is disclosed for use in biological treatment of waste water. It includes a shaft with a longitudinal axis and a plurality of sets of panels threaded on the axis and a plurality of panels mounted on a hub. The panels are provided with grooves and projections, preferably in the form of a V, where the active bio-material is housed.

### DESCRIPTION OF THE INVENTION

The invention aims to unite in a single biological purification procedure, the advantages of the two types of biomass cultivation: fixed and in suspension. To achieve this, it features a rotational device, most of which is submerged in the biological activated sludge reactor. It offers a support surface area that is adequate for the growth of bound active biomass and, together with the biomass in suspension in the reactor, contributes to the biological purification of waste water. It also guarantees aeration and the degree of mixing necessary for the execution of the biological purification processes.

In the description that follows, the characteristics of the invention are explained in more detail. The advantages that said invention presents with respect to what has been referred to as the state of the art in the background of the invention are put forward.

The rotatory device of this invention looks like a water wheel driven by a reduction motor with chain transmission.

Below are described the various fundamental elements composing the rotatory device of this invention:
- Means of support.
- A revolving structure, linked to the means of support by means of a pair of revolving wheels on a horizontal axis, the revolving structure comprising two parallel plates linked by means of a grid of bars in various planes perpendicular to those defined by the parallel plates.
- A set of hoops contained in the planes of the parallel plates to serve as receptors for packets of elements carrying biological material, to be described later.
- Elements carrying the biological material. These are grouped in packets arranged in the space between the parallel faces of the revolving structure.
- A set of hollow aerators in prismatic form provided with aeration apertures, arranged on the periphery of the revolving structure, in the gap between the parallel faces. The aerators can house the elements carrying biological material in their interior.

An essential distinctive element of the rotatory I device of this invention is the absence of a physical rotational axis. The axis that is usually present in these types of devices has been substituted by a metallic grid of bars distributed on the periphery of the cylinder formed by the plates of the rotational structure. This notably improves the mechanical behaviour of the rotational device to the forces of buckling.

A mechanical problem common in previous similar inventions is that, after longer or shorter periods of the device being stopped, the growth of biomass therewithin, especially in the submerged part in contact with waste water, creates a large imbalance in the rotational axis of the structure. This causes great difficulties in putting the device back into operation, also due to the excess weight of the rotational device. The grid of bars developed in this invention minimises this problem notably, being an advance on and an advantage with respect to the operation and maintenance of this type of device, allowing the adoption of larger lights.

Another essential distinctive element of the rotatory device of this invention is the physical medium developed to make possible and improve the correct growth of the bound biomass. The invention makes use of some elements in the form of discs, made of plastic material by means of injection or any other manufacturing process. Each disc features a central orifice and a separating sleeve. Said central orifice and sleeve are suitable for the passage of a common axis that enables the grouping of a specific number of discs. The length of the sleeve is that necessary to guarantee a suitable separation between two consecutive discs, ensuring a free space for enabling the growth of bound biomass and the passage both of air and of waste water.

Around this central sleeve, the disk expands radially in a triangular configuration in the preferred embodiment (although it can also adopt a wavy shape with any possible curvature), i.e. the development of any radial cut results in a saw-tooth line. The triangular profile of the disc opens from the centre, where it is more compact, to the exterior, where the triangles have larger size. The triangular profile of the discs has a triple purpose:
- The triangular configuration enables an increase in the useful surface area specifically for the growth of bound biomass compared to a flat profile.
- The way in which this profile opens towards the exterior enables easier detachment of the already digested biomass, making possible faster regeneration of the biomass and minimising the problems of blockage or occlusion when other types of support structure are used for biomass.
- Given that the discs are installed in a transverse orientation to the rotational axis, the triangular profile encourages the hydraulic flows of mixing in the reactor during the revolving of the rotational device.

The packets of disks are fixed to the structure of the rotational device so there is no need to consider an additional retaining structure for them. Also, in contrast to previous inventions that used plastic elements in suspension as biofilm carriers for the bound biomass, there is no need to consider filters, screens or sieves that may obstruct the hydraulic function of the system with the potential dangers of blockages and obstructions. In this way, the rotatory device object of the of invention offers a notable surface area for the support of bound biomass and at the same time improves the hydraulic efficiency of the system and minimises maintenance operations.

The third distinctive and essential element of the rotatory device of this invention are the aeration bodies, or more simply, aerators. These are hermetically closed bodies, of a generally prismatic shape (preferably cylindrical), which are provided with elongated openings situated along some (preferably one) of its generatrices. These aerators are placed on the exterior periphery thereof, with a certain separation therebetween. The width of the longitudinal openings, their orientation with respect to the rotational radius, the rotatory velocity of the rotational device, the height that the rotatory device extends above the surface of the water are all related factors that have been calculated to encourage and enhance the aeration capacity of the biological reactor by the rotatory device. During the revolution of the rotational device, in the fraction of time that the aeration cylinders are in contact with the air, these are almost completely emptied and air takes the place occupied by waste water moments before. Just at the moment of becoming submerged again, the aeration cylinders are again full of air. The aeration cylinders distribute said air gradually over their circular route through the waste water within the biological reactor. A packet of support discs, in turn, is installed in the interior of each of these aeration cylinders, encouraging the mixture between air and waste water and maximising the surface area of support for bound biomass offered by the rotational device.

### DESCRIPTION OF THE DRAWINGS

In order to complement the description that is being made and with the aim of helping towards a better understanding of the characteristics of the invention, together with a preferred example of its practical embodiment, a set of illustrative and non-limitative drawings is included, which represents the following:
Figure 1.- Shows a perspective view of the rotational device of the invention where the packets of discs and the hoops are omitted for clarity.
Figure 2.- Shows a perspective view of the revolving structure.
Figure 3.- Shows a perspective view of one of the biomass support discs.
Figure 4.- Shows a frontal view of one of the sectors wherein the means providing rigidity to the revolving structure divided.
Figure 5.- Shows a perspective view of an aerator.
Figure 6. Shows a partially sectioned side view of one of the aerators, which contains a packet of discs.

### PREFERRED EMBODIMENT OF THE INVENTION

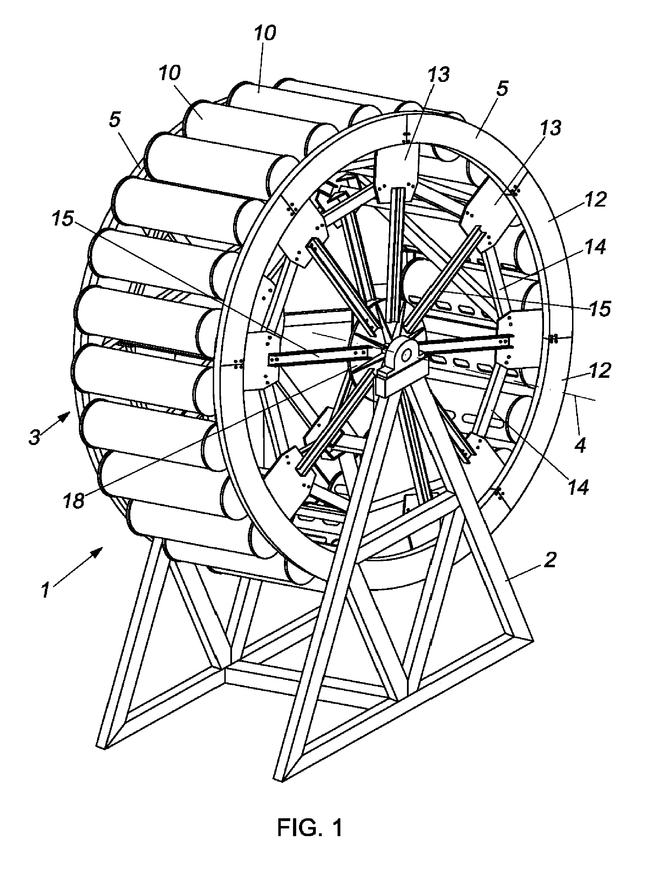

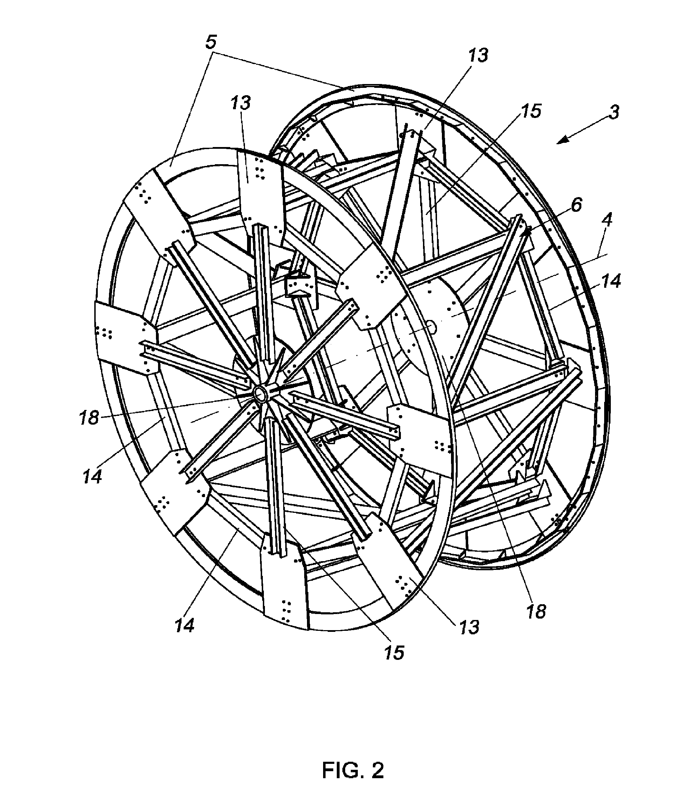

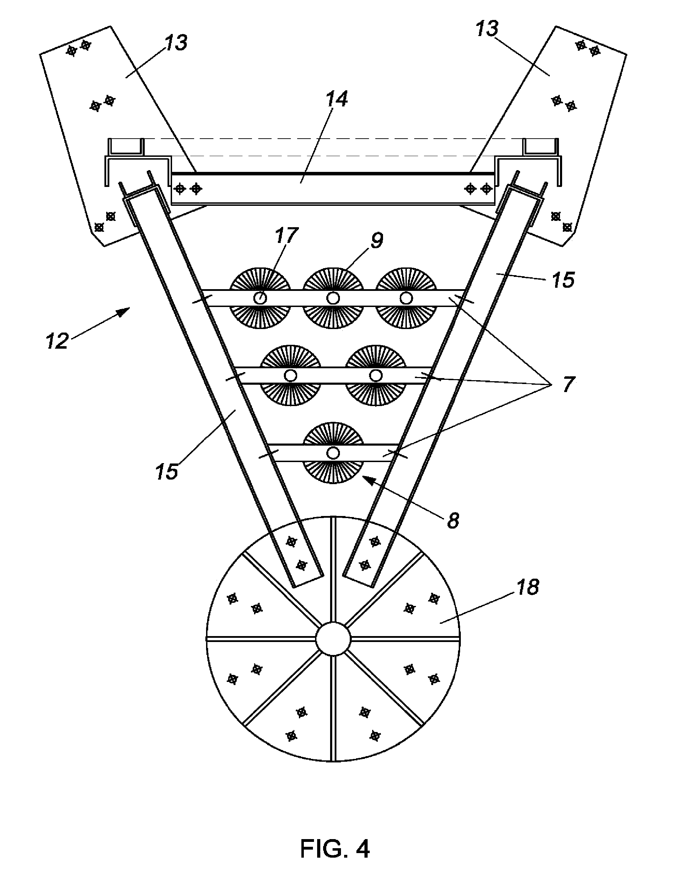

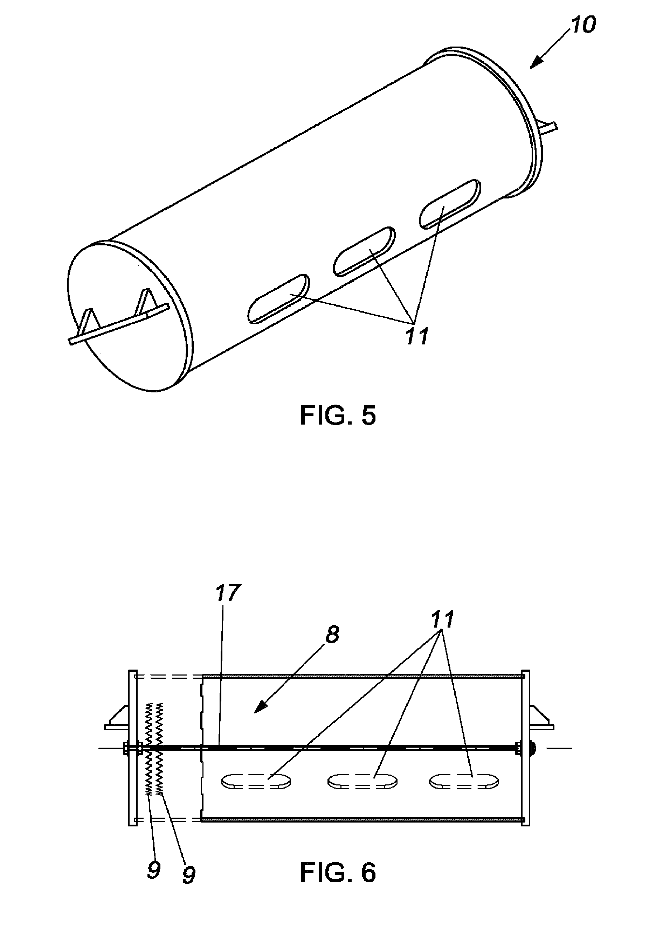

As can be seen in Figure 1, the rotatory device (1) of the invention for aeration and biofilm carrier for use in the purification of waste water comprises the following elements:
- means of support (2),
- a revolving structure (3), linked to the means of support (2) by means of a pair of wheels on the horizontal rotational axis (4). The revolving structure comprises two parallel plates (5) joined by means of a grid of bars (6) (see Figure 2) in various planes perpendicular to the parallel plates (5),
- a set of hoops (7) (see Figure 4) contained in the planes of the parallel plates (5), serving as receptors for packets (8) of discs (9) (see Figures 4 and 6) carrying the biological material,
- a plurality of discs (9) carrying biological material, arranged in a grouped way forming packets (8), distributed in the space between the parallel plates (5) of the revolving structure (3),
- a set of hollow prismatic aerators (10) provided with orifices (11) of aeration, said aerators arranged on the periphery of the revolving structure (3), in the gap between the parallel plates (5). The aerators (10) can house the packets (8) of discs (9) carrying biological material in their interior.

The Figures show a single embodiment of the means of support (2) in the form of a triangular structure. It should be understood that the protection conferred by the claims should also be extended without limitation to other embodiments of this means of support (2) that comprise different structures, including a set of supports on a fixed element, provided that they fulfil the function of supporting the revolving structure (3) and allowing the rotation of said revolving structure (3).

The parallel plates (5) can be composed of circular or polygonal stretches divided into sectors (12) assembled by any suitable joining media.

As can be seen in Figures 1, 2 and 4, the parallel plates (5) can include means providing rigidity that in turn comprise:
- exterior joining plates (13) rigidly fixed to the parallel plates (5), preferably distributed in a regular way,
- central joining plates (18) located in the centre of each of the parallel plates (5),
- mounting bars (14) joined to the exterior joining plates (13) and describing a polygonal shape,
- radial bars (15) that start from the centre of the central plates (18) and are joined to the exterior plates (13), describing triangular shapes formed by adjoining pairs of radial bars (15) and by the mounting bar (14) that joins to the upper part of the radial bars (15). Said radial bars (15) serve as fixing locations for the hoops (7).

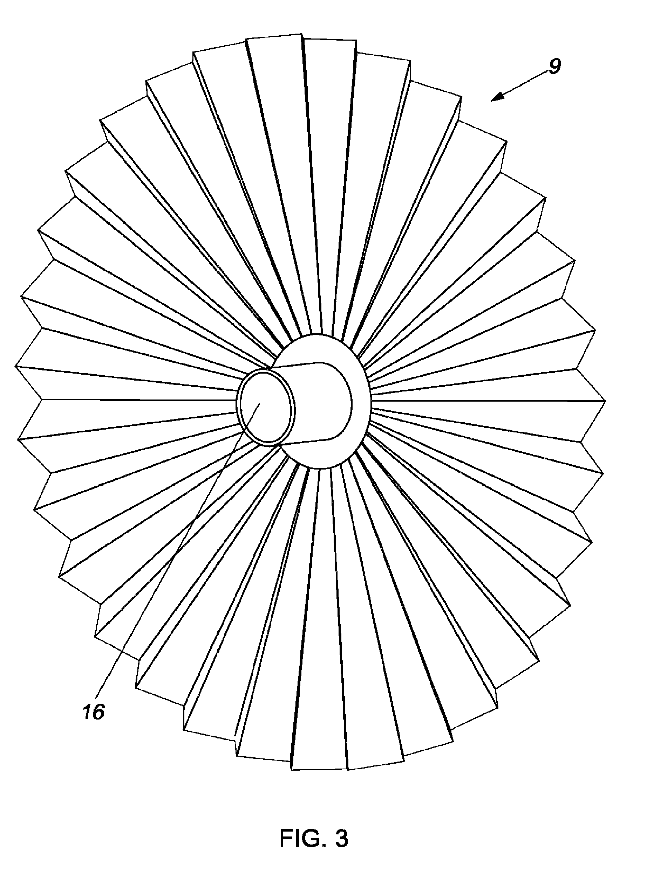

Figure 3 shows that the discs (9) carrying the biomass have a central orifice and a separating sleeve (16) that surrounds said central orifice. The surface of the discs (9) is not flat but undulated, so that the transverse section produces an undulating line, of a shape to be defined, over the length of the circumference. Said undulating form preferably presents a saw-tooth shape. More preferably, the saw-tooth lines are at 90°. There is a plurality of discs (9) linked by a shaft (17), which is introduced through the central orifice of each disc (9), separated from each other by the sleeves (16), forming a packet (8) of discs (9).

The radial bars (15) can serve as support for fixing the ends of the shafts (16) of the packets (8) of discs (9) carrying the biomass. In this way, the packets (8) of discs (9) are arranged in the interior of the space between the parallel plates (5), with the discs (9) parallel to these parallel plates (5) and the shafts fixed to the radial bars (15).

In Figures 5 and 6, it can be seen that the aerators (10) are composed of hermetically closed prismatic bodies (preferably cylindrical), that are provided with some elongated openings (11) for aeration located along the length of some (preferably one) of its generatrices. The aerators (10) are arranged in the revolving structure (3) of the invention, occupying the most exterior periphery of this revolving structure (3) and have a certain separation therebetween. The parameters of the aerators (10), such as the width of the openings, the orientation of said openings with respect to the rotational radius, the rotational velocity of the revolving structure (3), the height that the rotating device extends above the surface of the water are all related factors that have been calculated to encourage and enhance the aeration capacity of the biological reactor by the rotating device.

During the rotation of the revolving device (3), in the fraction of time that the aerators (10) are in contact with the air, these aerators (10) are almost completely emptied and air takes the place occupied by waste water moments before. Just at the moment of becoming submerged again, the aerators (10) are again full of air. The aerators (10) distribute the air gradually over their circular route through the waste water within the biological reactor.

In order to encourage the mixture between air and waste water and to maximise the surface area of support for biomass offered by the revolving device (1) of the invention, in the interior of each of these aerators (10), a packet (8) of biomass support discs (9) are installed.

## Claims

1. Aerating rotatory device (1) and biofilm carrier for waste water purification, partially submerged within a water purification reactor that includes:
- means of support (2), provided with two facing support pieces,
- a revolving structure (3), mounted on the two supporting pieces of the support means, and comprising two parallel plates (5), which comprise:
- exterior joining plates (13), rigidly fixed to the parallel plates (5), preferably distributed in a regular way,
- central joining plates (18), located in the centre of each of the parallel plates (5), each having holes to locate the means of support,
- mounting bars (14) linked to the exterior joining plates (13) and describing a polygonal shape and
- radial bars (15) that start from the centre of the central plates (18) and are joined to the exterior plates (13), disclosing triangular shapes formed by adjoining pairs of radial bars (15) and by the mounting bar (14) that joins the radial bars (15) by the exterior part of said radial bars (15) and
- a plurality of discs (9) holding biological material, arranged in a grouped way forming packets (8), distributed in the space between the parallel plates (5) of the revolving structure (3),
**characterised in that** the parallel plates (5) are joined by a grid (6) of containing bars in planes perpendicular to said parallel plates (5) and that the revolving structure (3) revolves with respect to the means of support (2) around supporting pieces, and that it is composed of a set of hollow aerators (10) consisting of prismatic bodies, provided with aeration openings (11) arranged on some of the generatrices of these prismatic bodies. These aerators (10), located on the periphery of the revolving structure (3), within the gap between the parallel plates (5), said aerators (10) rotating together with the revolving structure (3), introducing air into the waste water treatment reactor.

2. Rotatory device (1) according to claim 1, **characterised in that** it additionally comprises some hoops (7), held in the planes of the parallel plates (5), fixed at each of the two ends to radial bars (15) and serving as receptors for packets (8) of discs (9) bearing biological material.

3. Rotatory device (1) according to claims 1 or 2, **characterised in that** the discs (9) have a central orifice and a separating sleeve (16) that surrounds the central orifice and **in that** the packets (8) of discs (9) comprise a shaft that passes through the central orifices of a plurality of discs (9), separated from each other by the separating sleeves (16).

4. Rotatory device (1) according to claim 1, **characterised in that** the surface of the discs (9) is undulated.

5. Rotatory device (1) according to claim 4, **characterised in that** the surface of the discs (9) presents a saw-tooth section.

6. Rotatory device (1) according to claim 5, **characterised in that** the saw teeth are at an angle of 90° with respect to each other.

7. Rotatory device (1) according to claim 1, **characterised in that** the parallel plates (5) are divided in assembled sectors (12).

8. Rotatory device (1) according to claim 7, **characterised in that** the aerators (10) house packets (8) of discs (9) in their interiors.

9. Rotatory device (1) according to any of the claims 1 to 3, **characterised in that** the packets (8) of discs (9) are fixed at the two ends of the shafts (17) to the hoops (7). The packets (8) of discs (9) occupy the interior space between the parallel plates (5).
